# EUROPEAN PATENT SPECIFICATION

(11) **EP 1 505 370 B1**
(45) Date of publication and mention of the grant of the patent: **17.10.2007**
(21) Application number: 03017898.2
(22) Date of filing: 05.08.2003
(51) Int. Cl.: G01C 21/34

(54) **Method for processing digital map data**
Verfahren zum Verarbeiten von digitalen Kartendaten
Procédé de traitement de données cartographiques numériques

(43) Date of publication of application: 09.02.2005
(73) Proprietor: Harman Becker Automotive Systems GmbH, 76307 Karlsbad (DE)
(72) Inventor: Gelhar, Jens, 20257 Hamburg (DE); Lüssen, Harald, 20148 Hamburg (DE); Nagel, Philipp, 27220 Seevetal (DE)
(74) Representative: Grünecker, Kinkeldey, Stockmair & Schwanhäusser Anwaltssozietät

(56) References cited:
- EP-A- 0 372 840
- US-A1- 2002 169 543
- FUCHS A ET AL: "EVA-Netzabbildung und Routensuche für ein fahrzeugautonomes Ortungs- und Navigationssystem" NTZ (NACHRICHTENTECHNISCHE ZEITSCHRIFT), VDE VERLAG GMBH. BERLIN, DE, vol. 36, no. 4, April 1983 (1983-04), pages 220-223, XP002129852 ISSN: 0027-707X

## Description

The invention is directed to a method for processing digital map data, in particular, to a method for processing digital map data for route determination and to a method for determining a route between two points.

Navigation systems are used and proved useful in many different areas for providing a user with information on how to reach a predetermined destination starting from a predetermined starting point. For example, navigation systems are implemented in handheld GPS devices. As another example, more and more vehicles such as cars are provided with navigation systems.

In a vehicle, a navigation system assists the driver in providing driving instructions. In particular, a user can input a desired destination, for example, by choosing a specific destination out of a list of previously stored destinations or by entering destination coordinates. In addition to the destination being input by the user, the navigation system determines a current position, usually with the aid of a GPS system and, perhaps, additional movement sensors. Alternatively, a starting position can also be input manually by a user. Based on the starting point (such as the current position) and the destination point, the navigation system then determines a route, i.e. information (e.g., regarding the roads) on how to reach the destination starting from the predetermined starting point.

In order to determine a route, a navigation system uses digital map data. In the context of car navigation, the digital map data preferably comprises road data and, perhaps, additional topographic information. The roads, preferably, are classified such that a navigation system using the digital map data can distinguish between a small road and a motorway. Based on a given starting point, on a given end point and, in particular, on the digital map data, a navigation system determines, based on predetermined criteria, how to reach the destination. The route information provided to the user comprises, in particular, all information on the roads to be taken.

The article "EVA-Netzabbildung und Routensuche für ein fahrzeugautonomes Ortungs- und Navigationssystem", by Alois Fuchs, Manfred Mackert and Gisela Ziegler, Nachrichtentechnische Zeitschrift, vol. 36, no. 4, 4. April 1983, pages 220 - 223, discloses a vehicle navigation system and a method for route determination including manual segmentation of a network and subsequent digitization of maps. The segmentation defines segments represented by descriptors describing segment identification as well as a segment neighbor list consisting of elements that, in particular, specify a transition resistance.

However, route determination is always performed on a very small scale or a local level, for example, on the level of roads. For example, when determining a route in the context of car navigation, all possible roads within a region are to be considered. Hence, in the case that the starting point and the destination point are far away from each other, determining the route between these two points requires accessing and processing large amounts of data and, thus, costly and time consuming computations.

In view of this, it is the problem underlying the invention to provide a method that allows a simpler and faster determination of a route.

This problem is solved by a method for processing digital map data according to claim 1 and a method for determining a route according to claim 12.

Accordingly, a method for processing digital map data for route determination is provided, comprising:
a) dividing a region into a plurality of zones,
b) for each zone, automatically determining a cost value for at least one passing direction of the zone based on the digital map data of the zone and a predetermined cost criterion.

Digital map data comprises, in particular, map data representing (or covering) the region that is divided into a plurality of zones. A cost value is a numerical value assigned to a zone according to a predetermined cost criterion. In this way, in accordance with the predetermined criterion, each zone is weighted; by a cost value, the zone is given a weight or a rating.

There are different cost criteria possible that depend on the intended use of the map data. For example, a cost value can be given by the (estimated) time required to pass or traverse a zone. Alternatively, it is also possible to assign the distance that is required to pass the zone on a road as cost value. According to a further variant, the cost value can be given by the amount of toll charge to be paid when passing the zone. There are other possibilities as well.

It is to be noted that the previously mentioned examples can constitute different cost criteria or can be combined to form a single criterion. For example, the time required to pass the zone can be multiplied by the amount of toll charge yielding a combined cost value.

Therefore, the resulting cost values allow to compare different zones.

In many cases, there are different possibilities to pass the zones, i.e., different passing directions can be chosen. For example, a zone can be passed from north to south and from east to west. Thus, there can be different passing directions for the zones. For each of these passing directions, a cost value can be determined. Furthermore, depending on the cost criterion, the cost value for the passing direction "north to south" can, but need not be equal to the cost value for the passing direction "south to north".

As already discussed above, different cost criteria are possible. Depending on the intended use of the map data, several parameters can be relevant in a specific context. In such a case, a combined criterion can be based on different parameters, or, alternatively, different cost values (each according to a different cost criterion) can be determined for one zone and one passing direction. In this way, different sets of cost values can be obtained, each set corresponding to the cost values determined based on a specific cost criterion.

Due to the division of a region into a plurality of zones and the determined cost values, a first processing of the digital map data is obtained that simplifies any further processing. This is particularly useful when determining long distance routes where the route determination on the local level, (e.g. on the level of roads) is very time consuming. In this case, the zones provide an intermediate level and a corresponding pre-processing of the data. Furthermore, any local change (e.g., a traffic jam) can be taken into account on the level of zones and it is not necessary to re-determine the entire route on the global level. In addition, the zones allow to determine an approximate route (on the intermediate level given by the zones) in a very fast way and including an estimated distance and/or journey time.

According to a preferred embodiment, each cost value can be determined depending on the passing distance and/or the passing time for the passing direction of the zone. Preferably, each cost value can be proportional to the passing distance and/or the passing time.

This allows for a simple and fast determination of the cost values. If there are different possibilities to pass a zone along a specific passing direction (for example, if there are different roads leading the same passing direction), preferably, each cost value can be determined depending on the smallest passing distance and/or the smallest passing time. This applies correspondingly to other fields of application where roads are of minor relevance and, for example, the topography or other issues are of higher importance.

Advantageously, the cost value can be determined taking into account a predetermined part of an adjacent zone.

Two zones are adjacent if their boundaries overlap in at least one point. Thus, taking into account a predetermined part of an adjacent zone avoids boundary or quantization effects. For example, in some cases, e.g., if a road is situated in an adjacent zone but is near the boundary of the zones, it improves the results if this road is considered as being part of the zone for the purpose of determining the cost values. Therefore, in this embodiment, a zone is extended for determining a cost value.

In an advantageous embodiment of the previous methods, each zone can have a polygonal shape, preferably a rectangular or hexagonal shape. This further simplifies the division of the region and the determining of the cost values.

Preferably, step a) can comprise periodically tiling the region. The term "tiling" means that the region is covered by the zones without gaps and the zones (tiles) overlap only at their edges. In this way, a grid of zones is obtained. In particular, this simplifies the comparison of cost values of different passing directions within a zone and of cost values of different zones due to the symmetry.

In particular, if the zones have a rectangular or a hexagonal shape, step b) can comprise determining a cost value for passing a zone from one edge to the opposing edge and/or from one corner to the opposing corner. Such a symmetry further simplifies the determination of the cost values.

According to a preferred embodiment of all previously discussed methods, step b) can comprise determining cost values for passing a zone from one edge to each other edge, respectively and/or from one corner to each other corner, respectively. In this way, regarding to the edges or the corners of a zone, a weighting of all relevant passing directions of the zone by corresponding cost values is obtained.

In an advantageous embodiment, step b) can comprise determining a time-dependent cost value. In other words, the cost value for a specific passing direction of a specific zone is not a constant but a function of time.

In this way, varying conditions in a zone can be considered. For example, at rush hours, some roads may be jammed resulting in an increase of the passing time. These circumstances can be taken into account when determining a time dependent cost value.

Advantageously, step b) can comprise automatically re-determining a cost value of at least one zone on a regular basis and/or upon occurrence of an event of a predetermined type.

In such a case, the weighting of a zone via cost values is not fixed after these cost values have been determined. In other words, dynamic variations of a weighting are possible, which is particularly useful if it is to be expected that the conditions in some or all zones change in time.

Predetermined types of events can also trigger or initiate a re-determination of a cost value. Then, the cost value is updated if necessary which improves the precision of the method. For example, an explicit request by a user to re-determine a cost value constitutes such an event.

Preferably, an event of a predetermined time can be a traffic message. Then, if such a traffic message is received (e.g. via a traffic message channel TMC), a re-determination of the cost value is initiated resulting in an update of the cost value.

Re-determining a cost value can but need not comprise determining the cost value using the given cost criterion and all required parameters. Re-determining a cost value can preferably comprise modifying a current cost value, in particular, by adding a predetermined value to the current cost value or by multiplying the current value by a predetermined value. For example, if a traffic message informing on a traffic jam is received for a particular passing direction in a particular zone, a predetermined value for taking into account the traffic jam can be added to the corresponding current cost value. This is particularly useful, if the cost values have been determined and stored before and only small changes are to be applied.

According to an advantageous embodiment, the above methods can further comprise:
c) storing each cost value for each zone.

Thus, a data structure is obtained containing the necessary information on the zones of a region. If required by the method, for example, these cost values are accessed.

Preferably, step c) can comprise storing adjacency information for each zone. Adjacency information is the information on what zones are adjacent to a given zone. As already stated above, adjacent means that the boundaries of two zones overlap. For example, two zones can have an edge or a corner in common.

Such an adjacency information can be stored in different ways. For example, when storing the cost values for a zone, at the same time, also an identifier for each zone being adjacent in reality can be stored. Alternatively, the cost value of the zones can be stored in such a way that the data structure itself reflects the geometric relations between the zones.

Adjacency information is important for several reasons. First of all, when using the processed digital map data in order to determine route information, it is helpful to know what zone follows after having passed a previous zone. Furthermore, if cost values are determined using an extended zone, i.e. taking into account predetermined part of an adjacent zone, it is necessary to know the adjacency relations.

The invention further provides a method for determining a route between two points comprising:
a) providing digital map data being processed by one of the previously described methods,
b) automatically determining at least one sequence of zones connecting the two points, each zone of the sequence being adjacent to another zone of the sequence such that the overall cost value of the sequence of zones is optimized.

This method yields a "route" on the level of zones between two points which can be further used in a very useful way when, for example, in case of car navigation, determining the actual route on the level of roads. The determined sequence of zones comprises the zones one has to pass when going from the one point to the other point.

The sequence of the zones is determined such that the overall cost value of the sequence of zones is optimized. Preferably, the overall cost value can be given by the sum of the cost values of the zones of the sequence. The optimization criterion depends on the type of cost values. For example, if the cost criterion was the passing time and the resulting cost values are proportional to the passing time of a zone, the optimization criterion can consist in minimizing the overall passing time or journey time, i.e. to minimize the sum of the passing times in passing the zones between the one point and the other point. When using other cost values, the optimization can also be a maximization.

There are different possibilities to determine such a sequence of zones. In particular, algorithms can be used that were developed to find the shortest path from one vertex to another vertex in a weighted graph. In the present case, the weights of the edges of the graph are given by the cost values. The graph can be an ordered graph (wherein the edges are ordered pairs of vertices) or an undirected graph (wherein the edges are unordered pairs of vertices). If, for example, the passing direction from north to south in a zone is distinguished from the passing direction from south to north, the corresponding graph would be a directed graph.

Different algorithms are known to solve for the shortest path (the optimal sequence of zones). Possible algorithms are, for example, Dijkstra's algorithm, the Bellman-Ford algorithm, Johnson's algorithm, or the A-star algorithm.

Preferably, step b) can comprise automatically determining all sequences of zones connecting the two points, each zone of a sequence being adjacent to another zone of the sequence such that the overall cost value of the sequence of zones does not differ from the overall cost value of a sequence being optimal with respect to the cost values by more than a predetermined threshold.

This yields several alternative sequences of the zones that have similar overall cost values. This is useful if, during further processing of the digital map data, constraints are imposed, due to which some of the sequences of zones are eliminated. Furthermore, it is also possible to present these alternatives to a user that can choose between the sequences.

In an advantageous embodiment, step b) can comprise determining for each zone a difference between the overall cost value of a sequence comprising the zone and the overall cost value of a sequence being optimal with respect to the cost values.

In this way, each zone can be classified with respect to the zones belonging to an optimal sequence.

Preferably, for each zone, the difference to be determined is the difference between the globally optimal sequence and a best sequence comprising this zone. Usually, a zone is part of different sequences connecting two points. Thus, in this case, only the best (according to a corresponding optimization criterion) sequence is selected for determining the difference to the globally optimal sequence. This information can be used if the optimal sequence is not further processed for some reason, for example, if during a re-determination, the cost value of one zone being part of the optimal sequence changes so that the sequence that was optimal before is no longer optimal. In such a case, a new optimal sequence is to be determined for which the difference information can be used.

According to a preferred embodiment, step b) can comprise automatically re-determining the at least one sequence of zones connecting the two points on a regular basis and/or upon occurrence of an event of a predetermined type.

Such an update of the optimal sequence of zones has the effect that always the actually optimal sequence is present, particularly if the cost values of the zones are time-dependent or were changed due to a re-determination,.

Preferably, one of the two points is a current position and the other point is a destination point. This allows to use the method for navigation purposes where a user enters a destination point and a route is to be determined starting from the current position. In particular, if the optimal sequence of zone is re-determined during use, a navigation system is always working with an optimal sequence of zones connecting the current position and a destination point which increases the accuracy and quality of the navigation system.

According to a preferred embodiment, the overall cost value of each sequence can be optimized under at least one predetermined constraint.

In this way, additional information can be taken into account. For example, in the case of the car navigation system, a user can choose that only non-toll roads are to be considered. Such a choice is a possible constraint.

Preferably, a constraint is imposed by at least one zone that is chosen not to be part of a sequence of zones. This allows, for example, a user to select one or several zones he wants to avoid.

Advantageously, the previous methods for determining a route between two points can further comprise:
c) determining a route based on the digital map data for the zones of a determined sequence of zones connecting the two points.

Thus, after having determined an optimal sequence, a corresponding route, for example, on the level of roads, is determined which can be used to provide a user with navigation information. If the method is not used in the context of car navigation, but, for example, in the context of hiking or sailing, a route is not given by road information but via other information and parameters.

In any case, the digital map data corresponding to the zones of the determined sequence is combined to determine the route. The map data of other zones is not required. Thus, the route is determined in two steps: firstly, a sequence of zones is determined and secondly, based on this sequence of zones, the actual route information is obtained using the digital map data of only these zones. Therefore, this method provides a faster and simpler possibility to determine a route.

The invention also provides a method for assisting navigation comprising:
determining a route between a starting point and a destination point according to the previous method,
outputting route information in an acoustical and/or optical way.

Thus, the above method is used to determine a route, wherein the two points are the starting point and the destination point, respectively. After having determined the route, the corresponding route information is output to assist a user.

In addition, the invention also provides a computer program product directly loadable into an internal memory of a digital computer comprising software code portions for performing the steps of one of the previously described methods.

Further, a computer program product stored on a medium readable by a computer system is provided comprising computer readable program means for causing a computer to perform the steps of one of the previously discussed methods.

Further features and advantages of the invention will be described and explained with respect to the following examples and to the figures.
- Fig. 1: illustrates a tiling of a region;
- Fig. 2: depicts shapes of zones and corresponding passing directions;
- Fig. 3: is a flow diagram illustrating a method for determining a route;
- Fig. 4: illustrates cost values for a zone;
- Fig. 5: illustrates the cost values for a whole tiling of a region; and
- Fig. 6: illustrates sequences of zones.

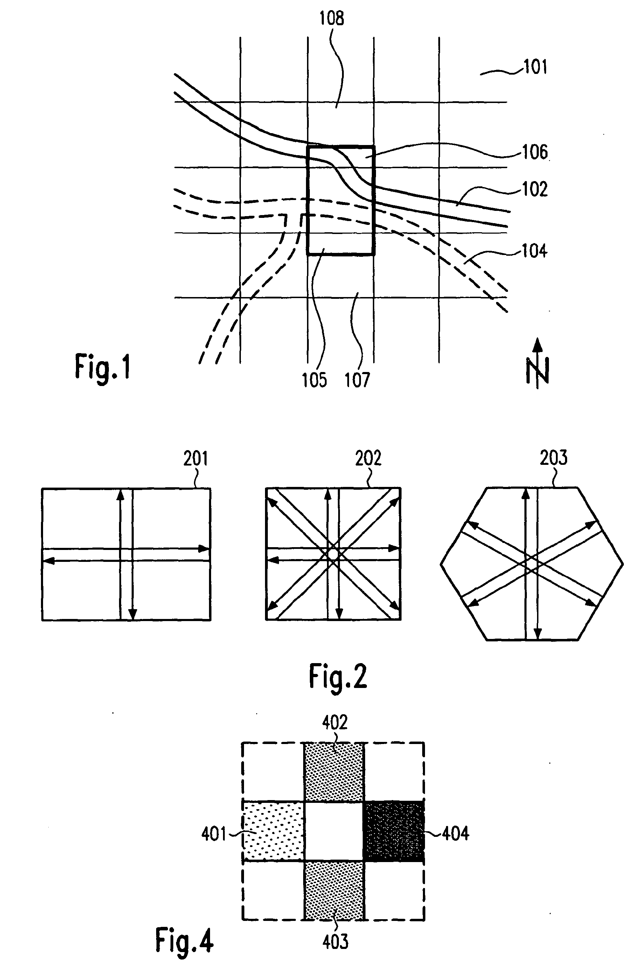

In Fig. 1, a map of a region is shown. In this example, the region is divided into a plurality of zones 101. In this case, the zones are squares that periodically tile the region. This means that the zones cover the region edge to edge without gaps between the zones. The zones only overlap in their edges.

The illustrated example is particularly relevant for the case of car navigation. In the map, routes 102 are shown. In the following, determining cost values will be explained with respect to a particular zone 103.

The cost value for passing the zone 103 from west to east (i.e. from the left to the right edge) is to be determined. As an example, the cost value is given by the passing time in the passing direction. As can be seen in the figure, there is a small road 104 leading from the left to the right of zone 103. Furthermore, there is a motorway 102 also crossing zone 103. However, this motorway 102 does not start of the left edge of zone 103 but at the upper edge. However, motorway 102 also comes from the west and leads to the east.

In the present example, for determining the cost values, the zones are extended to adjacent zones. In the case of a square tiling as illustrated in Fig. 1, each zone is surrounded by eight zones, in other words, eight zones are adjacent to zone 103.

For determining the cost value for passing zone 103 from west to east, parts 105 and 106 of adjacent zones 107 and 108 are also taken into account. Therefore, also the motorway 102 will be considered when determining the cost value.

As already stated above, the cost criterion in the present example is the passing time. For this criterion, average driving speeds for the different roads are given. For example, for the small road 104, the average driving speed is assumed to be 60 km/h whereas for the motorway 102, the average driving speed is estimated to be 120 km/h. The edge length of the zones depends on the area of the region and the scale of the corresponding map. A preferred edge length is between 5 and 20 km, more preferred, the edge length is about 10 - 12 km.

Although the passing distance for zone 103 in the considered passing direction is smaller for the case of road 104 than for motorway 102, due to the higher average driving speed, the passing time is smaller in the case of the motorway 102. If the length of the motorway 102 in the extended zone is 20 km, the corresponding cost value would be 10, since the time required to pass the zone 103 with its extension with the above average driving speed is 10 minutes.

Corresponding cost values can also be determined for the passing direction from east to west and from north to south and vice versa. Of course, other cost criteria, in particular, including combinations of relevant parameters can be used.

Fig. 2 illustrates shapes of zones and corresponding passing directions. Zone 201 has the shape of a rectangle. For this zone, 4 passing directions are indicated: left-right (from left to right), right-left, up-down and down-up. In this example, 4 passing directions are particularly useful if it is to be expected that the cost values for a left-right and right-left or up-down and down-up are not equal. Under the assumption that the cost values for these pairs are identical, respectively, one could also take only two passing directions, one for each pair of opposing edges.

Zone 202 has the shape of a square. In this case, there are eight passing directions. In addition to the four passing directions parallel to the edges (or being perpendicular to the edges) there are additional four passing directions parallel to the diagonals. Thus, in this case, the passing directions are directed from each edge to the opposing edge and from each corner to the opposing corner.

Zone 203 has a hexagonal shape. In the shown example, six passing directions are indicated, two for each pair of opposing edges.

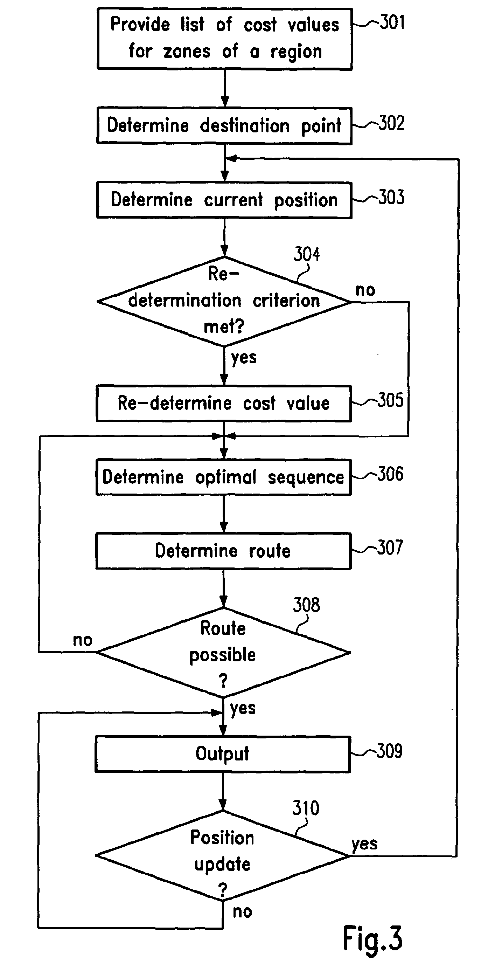

Fig. 3 is a flow diagram illustrating an example of how to determine a route in accordance with the present invention. In a first step 301, a list of cost values for the zones of a region is provided. For this, the region is divided into a plurality of zones. This division depends *inter alia* from the shape and the dimensions of the zones.

Then, the cost values are determined for each zone. Here, different information and parameters are to be given. One information is whether and what part of adjacent zones is to be considered when assessing the problem of cost values. Another question is the number of passing directions to be considered. Furthermore, at least one cost criterion must be given. Different cost criteria were already mentioned above, for example, the passing time or the passing distance. The cost criteria need not be based on static parameters only such as time or distance. It is also possible to additionally include dynamic information, for example, based on traffic messages or the like.

The corresponding cost values are determined for each passing direction and each zone. The cost values are stored in a memory with a suitable data structure reflecting the adjacency relations between the zones, i.e., which zone is adjacent to which and in what in direction. The list of cost values can be stored on a data carrier readable by a navigation system such as a CD or DVD.

It is also possible to determine more than one cost value for each passing direction and zone. For example, the cost values can be time-dependent. Alternatively or additionally, different cost values due to different cost criteria can be determined. In the latter case, sets of cost values are obtained. For example, a first set can comprise the cost values given by the passing time (for each passing direction and zone) but excluding toll roads. A second set can comprise the cost values also given by the passing time but including all possible roads in the zones.

Then, in step 302, a destination point is determined. This destination point can be entered by a user in different ways. For example, a user can choose among a list of possible, destinations stored in the system. Alternatively, a user can also enter coordinates of a destination point via a suitable input means such as a keyboard.

In a next step 303, the current position is determined. This can be achieved using satellite based information (e.g., with the aid of GPS) and, particularly in the case of vehicle navigation, alternatively or additionally, information provided by movement sensors (e.g., speed sensor, gyroscope). It is also possible to enter the current position manually.

After that, it is checked in step 304, whether a cost value re-determination criterion is met. For example, is can be provided that after predetermined time intervals, the cost values are to be determined again. Alternatively or additionally, such a re-determination can also be initiated by another event such as an incoming traffic message or a request by a user.

If such a criterion is fulfilled, the system continues with step 305 where the cost values are re-determined. However, this re-determination need not be performed for all zones. For example, if the re-determination criterion is based on a traffic message, the cost value of only those zones can be determined again that are actually concerned, for example, only those zones in which a traffic jam is present. In particular, the re-determination comprises adding a predetermined value to the current (stored) cost values of a zone. Furthermore, if, for example, a message is received that a traffic jam is no longer present in a zone, a negative value can be added to a cost value to which a positive value was added before because of the traffic jam. Alternatively or additionally, if a user wants to avoid certain zones, these zones can be provided with "penalty" costs by adding corresponding values to the current cost values.

If the criterion is not met in step 304, the method continues with step 306. Here, an optimal sequence of zones is determined connecting the current position and the destination point. The optimization is based on a predetermined optimization criterion. Such a criterion depends on the cost values (or the cost criteria) that were provided in step 301. For example, if the cost values are based on the passing time or the passing distance, an optimal sequence of zones is given by a sequence minimizing the sum of passing times or passing distances. It is to be noted that the optimal sequence need not be unique.

Additional constraints can be imposed for the optimization. For example, in the case of a car navigation system, a user can have decided to avoid specific zones. These constraints can be considered in different ways. On the one hand, they can be part of re-determining the cost values in step 305. For example, if zones are to be avoided, these zones can be provided with "penalty" costs, i.e., costs in addition to the costs as determined by the general cost criterion. Alternatively, the constraints can be taken into account in present step 306, for example, by not considering corresponding zones in the optimization procedure.

There are a number of algorithms to determine an optimal sequence as already stated above; one possibility being Dijkstra's algorithm. However, other variants are possible as well.

In this step, one can also determine for each zone how much the best sequence comprising this zone would differ from the optimal sequence. In this way, all zones can be rated by the difference in the overall cost value of the corresponding sequence compared to the optimal sequence.

After having determined an optimal sequence, an actual route is determined in step 307. In this step, the map data corresponding to the zones constituting the optimal sequence are considered and an optimal route (according to a corresponding optimization criterion) is determined. The resulting route information comprises all necessary navigation data for a user. In the case of a car navigation system, the route information comprises information on the sequence of roads the user must take in order to reach the destination starting from the current position. Thus, the map data of all the other zones is not to be considered any more which decreases the time required to determine the route.

However, as indicated by step 308, it might turn out that a route passing the zones of the sequence is not possible or only possible with additional, unexpected costs; for example, because the motorway (that was responsible for the excellent cost value in a specific zone) cannot be reached because there is no approach road to the motorway in the vicinity or the approach road is on the other side of a river. In such a case, the method returns to step 306 and determines a new optimal sequence taking this constraint into account.

If a route is possible, the method continues with step 309 where the route information is output. The kind of output depends on the type of system used and the circumstances. Usually, the output will be given optically and/or acoustically. In the exemplary case of a car navigation system, the route information can be output via loudspeakers and/or via a display. Preferably, only the route information relevant for the next moment or the next minutes will be output.

In the additional step 310, it is checked whether a position update criterion is met. For example, this criterion can be a predetermined time interval that has passed, an incoming traffic message, a corresponding input by a user or the like. If the criterion is fulfilled, the method returns to step 303 in which the current position is determined again. Else or in parallel to this, the output of the route information continues.

Fig, 4 is an example for how the cost values of a zone can be illustrated. This example corresponds to the case of a zone with square shape. There are four passing directions: north-south (i.e., from north to south), south-north, east-west, and west-east. In this figure, the colored or shaded squares 401, 402, 403, and 404 illustrate the cost values.

Square 401 representing the east-west passing direction is relatively bright which indicates that the cost value is relatively small, i.e., low route cost in this direction. Squares 402 and 403 representing the south-north and north-south passing direction, respectively, are darker than square 401, thus, indicating a larger cost value. Therefore, the north-south and the south-north passing direction are symmetric regarding the cost value. Square 404 representing the west-east passing direction is the darkest square and stands for a large cost value.

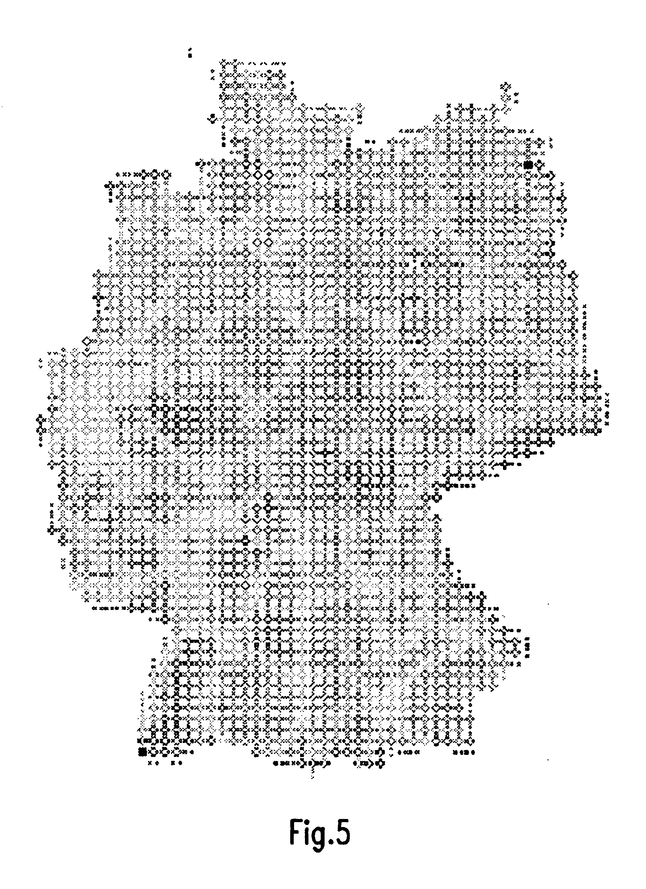

In Fig. 5, the contour of Germany is shown. The whole area was tiled periodically by zones having square shapes. Each zone comprises four passing directions being perpendicular to the edges. For each passing direction and each zone, the cost value (being the passing time) was determined.

The resulting cost values are illustrated in this figure using the representation as shown in Fig. 4. Darker shade means that the corresponding cost value is rather high. As can be seen in Fig. 5, there are connected parts that are relatively bright. These low route cost parts correspond to motorways. Dark parts, the high route cost parts, are due to hills and mountains requiring a longer time to pass the corresponding zones.

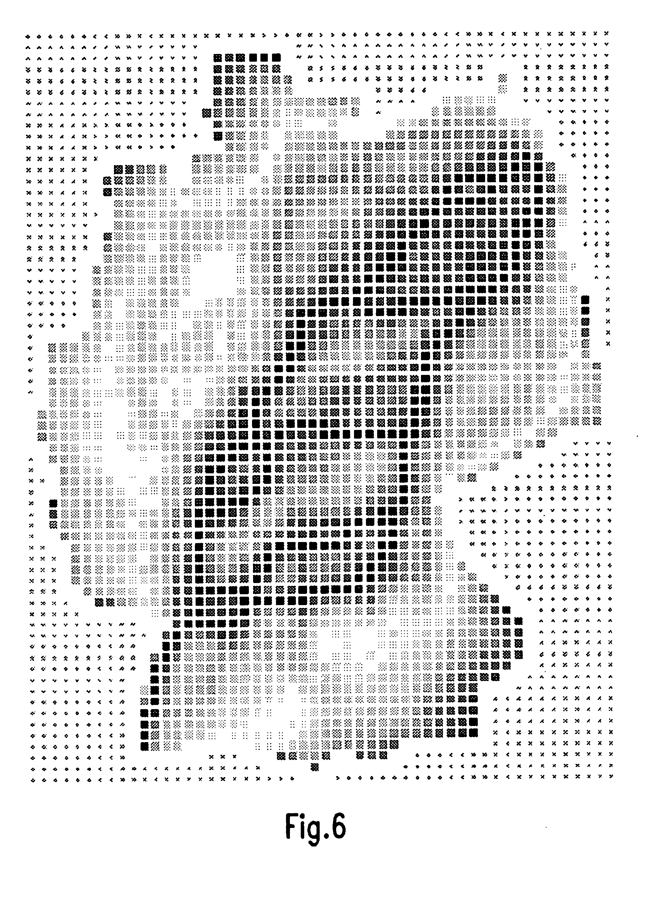

An example with sequences of zones is illustrated in Fig. 6. Also in this case, the contour of Germany is depicted. In this case, a route was determined starting from the southwest and leading to the northeast based on previously determined cost values. Each square shown in this figure represents a zone with square shape. Given the starting point and the endpoint, all possible sequences of zones connecting these points were determined. The shade of the squares shown in the figure corresponds to the overall passing time (journey time). The darkest squares belong to optimal sequences of zones. As can be seen, there is more than one optimal sequence.

The shade of the other squares relates to the difference in journey time of the corresponding sequence compared to the journey time of the optimal sequences. If a square belongs to a route the journey time of which differs only slightly from the journey time of the optimal routes it shade is still very dark but slightly brighter than the shade of the squares belonging to the optimal sequence. In this way, Fig. 6 illustrates the possible sequences of zones connecting the starting point and the destination point and their relation regarding the journey time for each sequence.

## Claims

1. Method for processing digital map data for route determination, comprising:
a) dividing a region into a plurality of zones,
**characterized by**
b) for each zone, automatically determining at least one cost value for at least one passing direction of the zone based on the digital map data of the zone and a predetermined cost criterion.

2. Method according to claim 1, wherein each cost value is determined depending on the passing distance and/or the passing time for the passing direction of the zone, preferably wherein each cost value is proportional to the passing distance and/or the passing time.

3. Method according to claim 1 or 2, wherein the cost value is determined taking into account a predetermined part of an adjacent zone.

4. Method according to one of the preceding claims, wherein each zone has a polygonal shape, preferably a rectangular or hexagonal shape.

5. Method according to one of the preceding claims, wherein step a) comprises periodically tiling the region.

6. Method according to claim 5, wherein step b) comprises determining cost values for passing a zone from one edge to each other edge, respectively and/or from one corner to each other corner, respectively.

7. Method according to one of the preceding claims, wherein step b) comprises determining a time-dependent cost value.

8. Method according to one of the preceding claims, wherein step b) comprises automatically re-determining a cost value of at least one zone on a regular basis and/or upon occurrence of an event of a predetermined type.

9. Method according to claim 8, wherein an event of a predetermined type is a traffic message.

10. Method according to one of the preceding claims, further comprising
c) storing each cost value for each zone.

11. Method according to claim 10, wherein step c) comprises storing adjacency information for each zone.

12. Method for determining a route between two points, comprising:
a) providing digital map data being processed by the method according to one of the preceding claims,
b) automatically determining at least one sequence of zones connecting the two points, each zone of the sequence being adjacent to another zone of the sequence, such that the overall cost value of the sequence of zones is optimized.

13. Method according to claim 12, wherein step b) comprises automatically determining all sequences of zones connecting the two points, each zone of a sequence being adjacent to another zone of the sequence, such that the overall cost value of the sequence of zones does not differ from the overall cost value of a sequence being optimal with respect to the cost values by more than a predetermined threshold.

14. Method according to claim 12 or 13, wherein step b) comprises determining for each zone a difference between overall cost value of a sequence comprising the zone and the overall cost value of a sequence being optimal with respect to the cost values.

15. Method according to one of the claims 12 - 14, wherein step b) comprises automatically re-determining the at least one sequence of zones connecting the two points on a regular basis and/or upon occurrence of an event of a predetermined type.

16. Method according to one of the claims 12 - 15, wherein one of the two points is a current position and the other point is a destination point.

17. Method according to one of the claims 12 - 15, wherein the overall cost value of each sequence is optimized under at least one predetermined constraint.

18. Method according to claim 16, wherein a constraint is imposed by at least one zone that is chosen not to be part of a sequence of zones.

19. Method according to one of the claims 12 - 17, further comprising:
c) determining the route based on the digital map data for the zones of a determined sequence of zones connecting the two points.

20. Method for assisting navigation, comprising:
determining a route between a starting point and a destination point according to the method of claim 19,
outputting route information in an acoustical and/or optical way.

21. Computer program product directly loadable into an internal memory of a digital computer, comprising software code portions for performing the steps of the method according to one of the claims 1 to 20.

22. Computer program product stored on a medium readable by a computer system, comprising computer readable program means for causing a computer to perform the steps of the method according to one of the claims 1 to 20.

## Patentansprüche

1. Verfahren zum Verarbeiten von digitalen Kartendaten für eine Routenbestimmung, umfassend:
a) Unterteilen einer Region in eine Mehrzahl von Zonen,
**gekennzeichnet durch**
b) automatisches Bestimmen zumindest eines Kostenwerts für jede Zone für zumindest eine Passierrichtung der Zone basierend auf den digitalen Kartendaten der Zone und einem vorbestimmten Kostenkriterium.

2. Verfahren gemäß Anspruch 1, in dem jeder Kostenwert in Abhängigkeit von dem Passierabstand und/oder der Passierzeit für die Passierrichtung der Zone bestimmt wird, wobei vorzugsweise jeder Kostenwert proportional zu dem Passierabstand und/oder der Passierzeit ist.

3. Verfahren gemäß Anspruch 1 oder 2, in dem jeder Kostenwert unter Berücksichtigung eines vorbestimmten Teils einer benachbarten Zone bestimmt wird.

4. Verfahren gemäß einem der vorhergehenden Ansprüche, in dem jede Zone eine polygonale Form, vorzugsweise eine rechteckige oder hexagonale Form, besitzt.

5. Verfahren gemäß einem der vorhergehenden Ansprüche, in dem Schritt a) ein periodisches Mosaikaufteilen der Region umfasst.

6. Verfahren gemäß Anspruch 5, in dem Schritt b) das Bestimmen von Kostenwerten für das Passieren einer Zone von einem Rand zu jeweils jedem anderen Rand und/oder von einer Ecke zu jeweils jeder anderen Ecke umfasst.

7. Verfahren gemäß einem der vorhergehenden Ansprüche, in dem Schritt b) das Bestimmen eines zeitabhängigen Kostenwerts umfasst.

8. Verfahren gemäß einem der vorhergehenden Ansprüche, in dem Schritt b) das automatische Neubestimmen eines Kostenwerts von zumindest einer Zone auf einer regulären Basis und/oder bei Auftreten eines Ereignisses einer vorbestimmten Art umfasst.

9. Verfahren gemäß Anspruch 8, in dem ein Ereignis einer vorbestimmten Art eine Verkehrsnachricht ist.

10. Verfahren gemäß einem der vorhergehenden Ansprüche, weiterhin umfassend
c) Speichern jedes Kostenwerts für jede Zone.

11. Verfahren gemäß Anspruch 10, in dem Schritt c) das Speichern von Nachbarschaftsinformation für jede Zone umfasst.

12. Verfahren zum Bestimmen einer Route zwischen zwei Punkten, umfassend:
a) Bereitstellen von digitalen Kartendaten, die durch das Verfahren gemäß einem der vorhergehenden Ansprüche verarbeitet werden,
b) automatisches Bestimmen von zumindest einer Reihenfolge von Zonen, die die zwei Punkte verbinden, wobei jede Zone der Reihenfolge einer anderen Zone der Reihenfolge benachbart ist, so dass der Gesamtkostenwert der Reihenfolge der Zonen optimiert wird.

13. Verfahren gemäß Anspruch 12, in dem Schritt b) das automatische Bestimmen sämtlicher Reihenfolgen von Zonen, die die zwei Punkte verbinden, umfasst, wobei jede Zone der Reihenfolge einer anderen Zone der Reihenfolge benachbart ist, so dass sich der Gesamtkostenwert der Reihenfolge der Zonen nicht um mehr als einen vorbestimmten Schwellenwert von dem Gesamtkostenwert einer Reihenfolge unterscheidet, die hinsichtlich der Kostenwerte optimal ist.

14. Verfahren gemäß Anspruch 12 oder 13, in dem Schritt b) für jede Zone das Bestimmen eines Unterschieds zwischen dem Gesamtkostenwert einer Reihenfolge, die die Zone umfasst, und dem Gesamtkostenwert einer Reihenfolge, die hinsichtlich der Kostenwerte optimal ist, umfasst.

15. Verfahren gemäß einem der Ansprüche 12-14, in dem Schritt b) das automatische Neubestimmen der zumindest einen Reihenfolge von Zonen, die die zwei Punkte verbinden, auf einer regulären Basis und/oder bei Auftreten eines Ereignisses einer vorbestimmten Art umfasst.

16. Verfahren gemäß einem der Ansprüche 12 - 15, in dem einer der zwei Punkte eine gegenwärtige Position ist, und der andere Punkt ein Zielpunkt ist.

17. Verfahren gemäß einem der Ansprüche 12-15, in dem der Gesamtkostenwert jeder Reihenfolge unter zumindest einer vorbestimmten Bedingung optimiert wird.

18. Verfahren gemäß Anspruch 17, in dem eine Bedingung durch zumindest eine Zone aufgestellt wird, die so gewählt ist, dass sie nicht Teil einer Reihenfolge von Zonen ist.

19. Verfahren gemäß einem der Ansprüche 12 - 17, weiterhin umfassend:
c) Bestimmen der Route basierend auf den digitalen Kartendaten für die Zonen einer bestimmten Reihenfolge von Zonen, die die zwei Punkte verbinden.

20. Verfahren zum Unterstützen einer Navigation, umfassend:
Bestimmen einer Route zwischen einem Startpunkt und einem Zielpunkt gemäß dem Verfahren von Anspruch 19,
Ausgeben von Routeninformationen auf eine akustische und/oder optische Weise.

21. Computerprogrammprodukt, das direkt in einen internen Speicher eines digitalen Computers ladbar ist, Software - Codeteile zum Ausführen der Schritte des Verfahrens gemäß einem der Ansprüche 1-20 umfassend.

22. Computerprogrammprodukt, das auf einem Medium gespeichert ist, das von einem Computersystem lesbar ist, computerlesbare Programmmittel zum Veranlassen eines Computers dazu, die Schritte des Verfahrens gemäß einem der Ansprüche 1-20 auszuführen, umfassend.

## Revendications

1. Procédé de traitement de données cartographiques numériques pour une détermination de route, comprenant de :
a) diviser une région en une pluralité de zones,
**caractérisé par**
b) pour chaque zone, déterminer automatiquement au moins une valeur de coût pour au moins une direction passant de la zone basée sur les données cartographiques numériques de la zone et un critère de coût prédéterminé.

2. Procédé selon la revendication 1, dans lequel chaque valeur de coût est déterminée selon la distance passée et/ou le temps passé pour la direction de passage de la zone, de préférence dans lequel chaque valeur de coût est proportionnelle à la distance passée et/ou le temps passé.

3. Procédé selon la revendication 1 ou 2, dans lequel la valeur de coût est déterminée en prenant en compte une partie prédéterminée d'une zone adjacente.

4. Procédé selon l'une des revendications précédentes, dans lequel chaque zone a une forme polygonale, de préférence une forme rectangulaire ou hexagonale.

5. Procédé selon l'une des revendications précédentes, dans lequel l'étape a) comprend de quadriller périodiquement la région.

6. Procédé selon la revendication 5, dans lequel l'étape b) comprend de déterminer des valeurs de coûts pour passer une zone depuis un bord à chaque autre bord, respectivement et/ou depuis un coin vers chaque autre coin, respectivement.

7. Procédé selon l'une des revendications précédentes, dans lequel l'étape b) comprend de déterminer une valeur de coût dépendante du temps.

8. Procédé selon l'une des revendications précédentes, dans lequel l'étape b) comprend de re-déterminer automatiquement une valeur de coût d'au moins une zone sur une base régulière et/ou selon l'apparition d'un évènement d'un type prédéterminé.

9. Procédé selon la revendication 8, dans lequel un évènement d'un type prédéterminé est un message de trafic.

10. Procédé selon l'une des revendications précédentes, comprenant en outre de
c) stocker chaque valeur de coût pour chaque zone.

11. Procédé selon la revendication 10, dans lequel l'étape c) comprend de stocker de l'information de proximité pour chaque zone.

12. Procédé pour déterminer une route entre deux points, comprenant de:
a) fournir des données cartographiques numériques traitées par le procédé selon l'une des revendications précédentes,
b) déterminer automatiquement au moins une séquence de zones connectant les deux points, chaque zone de la séquence étant adjacente à une autre zone de la séquence, de sorte que la valeur de coût total de la séquence de zones est optimisée.

13. Procédé selon la revendication 12, dans lequel l'étape b) comprend de déterminer automatiquement toutes les séquences de zones connectant les deux points, chaque zone d'une séquence étant adjacente à une autre zone de la séquence, de sorte que la valeur de coût total de la séquence de zones ne diffère pas de la valeur de coût totale d'une séquence optimale par rapport aux valeurs de coûts de plus d'une valeur de seuil prédéterminée.

14. Procédé selon la revendication 12 ou 13, dans lequel l'étape b) comprend de déterminer pour chaque zone une différence entre la valeur de coût total d'une séquence comprenant la zone et la valeur de coût total d'une séquence optimale par rapport aux valeurs de coûts.

15. Procédé selon l'une des revendications 12 à 14, dans lequel l'étape b) comprend de re-déterminer automatiquement la au moins une séquence de zones connectant les deux points sur une base régulière et/ou selon l'apparition d'un évènement de type prédéterminé.

16. Procédé selon l'une des revendications 12 à 15, dans lequel un des deux points est une position actuelle et l'autre point est un point de destination.

17. Procédé selon l'une des revendications 12 à 15, dans lequel la valeur de coût total de chaque séquence est optimisée sous au moins une contrainte prédéterminée.

18. Procédé selon la revendication 16, dans lequel une contrainte est imposée par au moins une zone qui est choisie pour ne pas être une partie d'une séquence de zones.

19. Procédé selon l'une des revendications 12 à 17, comprenant en outre de :
c) déterminer la route basée sur les données cartographiques numériques pour les zones d'une séquence déterminée de zones connectant les deux points.

20. Procédé d'assistance de navigation, comprenant de :
déterminer une route entre un point de départ et un point de destination selon le procédé de la revendication 19,
donner une information de route de manière acoustique et/ou optique.

21. Produit de programme d'ordinateur directement chargeable dans une mémoire interne d'un ordinateur numérique, comprenant des parties de codes de logiciels pour réaliser les étapes du procédé selon l'une des revendications 1 à 20.

22. Produit de programme d'ordinateur stocké dans un support lisible par un système d'ordinateur, comprenant des moyens de programmes lisibles par ordinateur pour entraîner un ordinateur à réaliser les étapes du procédé selon l'une des revendications 1 à 20.
